# EUROPÄISCHE PATENTSCHRIFT

(11) **EP 1 413 711 B1**
(45) Veröffentlichungstag und Bekanntmachung des Hinweises auf die Patenterteilung: **01.04.2009**
(21) Anmeldenummer: 02023472.0
(22) Anmeldetag: 21.10.2002
(51) Int. Cl.: F01D 5/08

(54) **Gasturbine und Verfahren zum Kühlen einer Gasturbine**
Gasturbine and method of cooling a gasturbine
Turbine à gaz et méthode de refroidissement d'une turbine à gaz

(43) Veröffentlichungstag der Anmeldung: 28.04.2004
(73) Patentinhaber: SIEMENS AKTIENGESELLSCHAFT, 80333 München (DE)
(72) Erfinder: Tiemann, Peter, 58452 Witten (DE)

(56) Entgegenhaltungen:
- EP-A- 0 806 544
- EP-A- 0 900 919
- US-B1- 6 195 979

## Beschreibung

Die Erfindung bezieht sich auf eine Gasturbine mit einer Turbinenwelle, die eine Anzahl von nebeneinander angeordneter Scheiben aufweist, an denen jeweils eine Anzahl von Laufschaufeln sternförmig befestigbar sind, wobei diese mit zumindest einem Kühlmittel, welches durch Kühlmittelkanäle innerhalb der Laufschaufeln strömt, kühlbar sind und auf ein Verfahren zum Kühlen dieser.

Turbinen werden in vielen Bereichen eingesetzt, hauptsächlich als Antriebe in der Flugzeugindustrie und zur Energiegewinnung. Bei der Energiegewinnung unterscheidet man zwischen Gasturbinen und Dampfturbinen, die beide, oft gleichzeitig in so genannten GuD-Anlagen zum Antrieb von Generatoren genutzt werden. In der Gasturbine, die im Folgenden betrachtet sei, wird ein Brennmittel-Luftgemisch in einem Brennraum gezündet, von wo aus, sich das dabei entstehende Arbeitsmedium in Richtung der Laufschaufeln über diese arbeitsleistend hinweg entspannt. Die Energie des Arbeitsmedium wird mittels der Laufschaufeln in Bewegungsenergie umgesetzt, die mit der Rotation der Turbinenwelle an Generatoren weitergegeben wird.

Das Brennmittel-Luftgemisch verbrennt üblicherweise bei einer Temperatur von 1200 °C bis 1300 °C emissionsarm und erzielt dabei einen hohen Wirkungsgrad. Generell kann der Wirkungsgrad weiter gesteigert werden durch eine weitere Erhöhung der Verbrennungstemperatur.

Bei diesen hohen Verbrennungstemperaturen des Arbeitsmediums werden an die Komponenten der Gasturbine, die mit dem Arbeitsmedium in Berührung kommen, höchste Anforderungen bezüglich thermischer Beständigkeit, mechanischer Festigkeit und Lebensdauer gestellt. Dabei soll unter Berücksichtigung des Betriebsrisikos und der Wirtschaftlichkeit der einzelnen Komponenten ein größtmöglicher Wirkungsgrad erzielt werden.

Thermische Beständigkeit, eine hohe Lebensdauer und Zuverlässigkeit wird auch für die Laufschaufeln einer Gasturbine gefordert. Damit die Laufschaufeln der in Strömungsrichtung des Arbeitsmediums gesehenen ersten Laufschaufelreihe den höchsten thermischen Belastungen standhalten, werden sie bekanntermaßen gekühlt. Dazu sind sie im allgemeinen mit Hohlräumen durchzogen, die ein verzweigtes Kanalsystem bilden, in dem ein Kühlmittel strömt. Als Kühlmittel wird entweder verdichtete Luft oder Dampf eingesetzt, oder auch beides gleichzeitig. Dampf weist dabei eine bessere Kühleigenschaft als verdichtete Luft auf. Allerdings stellt Dampf einen höheren Anspruch an die Dichtigkeit des kompletten Kühlsystems, was einen höheren Fertigungsaufwand für die Kühlmittelführung bedeutet.

Bekannt ist, dass Laufschaufeln luft- und/oder dampfgekühlt werden. Die Luftkühlung kann als offene sowie geschlossene Kühlung erfolgen, die Dampfkühlung ist jedoch nur als geschlossenes Kühlsystem sinnvoll. Bei der Kühlung von Laufschaufeln einer Gasturbine ist der erhebliche Druckunterschied zwischen Arbeitsmedium und Kühlmittel nur durch technisch hohen Aufwand beizubehalten. Zur Sperrung der Bereiche gegeneinander ist ein aufwändiges Dichtsystem über den Führungsweg des Kühlmittels erforderlich, um die Leckageverluste gering zu halten und somit eine effiziente Kühlung zu gewährleisten. Nachteilig sind die dafür erforderlichen enormen wirtschaftlichen und technischen Aufwendungen, die obendrein zur Reduzierung der Betriebssicherheit und der Zuverlässigkeit aufgrund der komplizierten Technik führen.

Beispielsweise ist aus der EP 0 806 544 A1 und EP 0 900 919 A2 jeweils ein Turbinenrotor bekannt, durch den die an ihm befestigten Laufschaufeln zur Kühlung mit Frischdampf versorgt und durch den der Brauchdampf abgeführt werden kann.

Dabei erfolgt die Frischdampfzufuhr durch einen Versorgungskanal, der im Rotor radial weiter innen liegt als der Kanal, durch den der Brauchdampf abgeführt wird.

Die Zuführung von Kühlmittel zu einzelnen Laufschaufeln der unterschiedlichen Laufschaufelreihen ist auf Grund der Anordnungen der einzelnen beteiligten Elemente sehr schwierig und erfordert einen hohen Aufwand, um die erforderliche Dichtigkeit des Systems und ein geringes Betriebsrisiko zu garantieren.

Aufgabe der vorliegenden Erfindung ist es, den Wirkungsgrad der Gasturbine mit wirtschaftlich vertretbarem Aufwand zu erhöhen, gleichzeitig das Betriebsrisiko zu mindern bzw. die Lebensdauer der Elemente und die Zuverlässigkeit der Gasturbine zu erhöhen.

Diese Aufgabe wird erfindungsgemäß dadurch gelöst, dass zwischen zwei unmittelbar benachbarten Scheiben in Radialrichtung mehrere Hohlräume eingeschlossen sind, die jeweils die Turbinenwelle in Umfangsrichtung umgreifen und in denen Kühlmittel in unterschiedlichen Drücken vorherrschen, wobei das oder die Kühlmittel in die Hohlräume jeweils ein und ausströmbar ist.

Die Erfindung geht dabei von der Überlegung aus, dass das Betriebsrisiko durch eine Vereinfachung der Kühlmittelzufuhr der Laufschaufeln verkleinert werden kann. Die daraus resultierende vorteilhafte Reduzierung der Anzahl der Dichtungen bei gleichzeitiger Verkürzung der verbleibenden Dichtlänge erhöht die Betriebssicherheit, vermindert die Ausfallwahrscheinlichkeit und reduziert die Leckageverluste des Kühlmittels. Zusätzlich können einfachere Dichtsysteme verwendet werden, die ebenso das Betriebsrisiko senken. In den einzelnen Hohlräumen zwischen zwei benachbarten Scheiben strömen dabei mehrere Kühlmittel unterschiedlicher Qualität, dies sind "frische" Kühlmittel wie Frischluft und/oder Frischdampf, die zu den Laufschaufeln geführt werden und/oder "verbrauchte" Kühlmittel wie Brauchluft und/oder Brauchdampf, die von den Laufschaufeln weggeführt werden. Das einfache und zuverlässige Bereitstellen der Kühlmittel erlaubt das effiziente Einsetzen dieser und ermöglichte infolgedessen eine gewinnbringende Wirkungsgradsteigerung, da die dem Arbeitsmedium ausgesetzten Bauelemente höheren Temperaturen standhalten.

Dabei werden radial benachbarten Hohlräume durch fliehkraftbasierte Dichtungen, die jeweils an beiden benachbarten Scheiben in einer Fase anliegen, äußerst effizient gegeneinander abgedichtet. Diese äußerst zuverlässige Art und Weise des Abdichtens radial benachbarter Bereiche reduziert die Leckageverluste im Kühlmittel.

Eine absolut dichte sichere Verbindung ist vorteilhafterweise gegeben, wenn die integrierten Kühlmittelkanäle einer jeden auf ein und derselben Scheibe angeordneten Laufschaufel, mit ein und demselben Hohlraum, der mit einer benachbarten Scheibe eingeschlossen wird, über eine radiale Bohrung oder Durchlass kommuniziert.

Vorteilhafterweise kommuniziert mindestens einer der Hohlräume mit einer Kühlmittelversorgung oder Kühlmittelentsorgung.

Nach einem Verfahren zum Kühlen von Laufschaufeln einer Gasturbine, welche gemäß dem Oberbegriff des Anspruchs 1 ausgebildet ist, wird vorgeschlagen, dass der Druck des Kühlmittels, welches durch einen Hohlraum strömt, größer ist als der Druck des Kühlmittels, welches durch den radial nächstäußeren Hohlraum strömt. Im ungünstigen Fall eines Defekts einer im wesentlichen sehr robusten Fliehkraftdichtung treten Leckageverluste folglich nur von einer Druckstufe zur nächstgeringeren auf, also von einem Hohlraum zum radial nächstäußeren.

Dabei ist vorgesehen, dass im radial innersten Hohlraum Frischdampf, im nächstäußeren Hohlraum Brauchdampf und dem nächstäußeren Hohlraum Frischluft strömt.

Gasturbinen werden häufig mit mehrstufigen Dampfturbinen betrieben (als GuD-Anlagen), die als Arbeitsmedium Dampf mit unterschiedlichen Drücken benötigen. Dem Arbeitsmedium Dampf einer Hochdruck-Dampfturbine wird ein Anteil entnommen und zur Kühlung von Bauteilen einer Gasturbine verwendet. Der entnommene Anteil des Dampfes wird in dieser Anmeldung als Frischdampf bezeichnet und weist einen Druck in der Größenordnung von ca. 40 bar auf. Der Brauchdampf, mit ca. 30 bar, der nach dem Kühlen der dem Heißgas ausgesetzten Bauteile zurückbleibt, kann als Arbeitsmedium einer Mitteldruck-Dampfturbine zugeführt werden. Das Kühlmittel Dampf wird somit gewinnbringend mehrfach eingesetzt. Die im Fehlerfall vorhandenen Leckageanteile des Frischdampfes treten aufgrund des Druckgefälles nur in Richtung des Brauchdampfes auf und vermischen sich mit diesem. Der Brauchdampf wird der Mitteldruck-Dampfturbine wieder zugeführt und so werden die durch Leckage hervorgerufene Verluste reduziert. Falls ein Teil des Brauchdampfes durch Leckage in Richtung des geringen Druckes strömt und sich mit der Frischluft vermischt, so wird dieser Teil weiterhin nutzbringend zur Kühlung eingesetzt. Kühlmittelanteile gehen nur dann verloren, wenn Undichtigkeiten zwischen dem Bereich, in der die Frischluft strömt und dem Strömungskanal des Arbeitsmediums der Gasturbine auftreten.

Die Erfindung stellt somit ein radiales Mehrschichtsystem von gegeneinander abgeschirmten Bereichen dar, in denen unterschiedliche Drücke vorherrschen. Dabei herrscht radial von innen nach außen gesehen ein Druckgefälle. Der größte Druck herrscht, hervorgerufen von Frischdampf, radial gesehen im innersten Hohlraum zweier benachbarter Scheiben, radial weiter außen im nächsten Hohlraum der nächstniedrigere Druck, hervorgerufen von Brauchdampf, radial weiter außen im äußersten Hohlraum der nächstniedrige Druck, hervorgerufen von Frischluft, und im Strömungskanal, der zwischen Turbinenwelle und Stator angeordnet ist, liegt der niedrigste Druck vor, hervorgerufen vom Arbeitsmedium. Vorteilhaft sind die zwischen den Scheiben in Umfangsrichtung verlaufenden kurzen Dichtlängen bei gleichzeitig geringer Anzahl an Dichtelementen und die gewinnbringende schichtweise Anordnung der Kühlmittel unterschiedlichen Druckes, die eine teilweise nutzbringende Weiterverwendung des Leckagestroms ermöglichen.

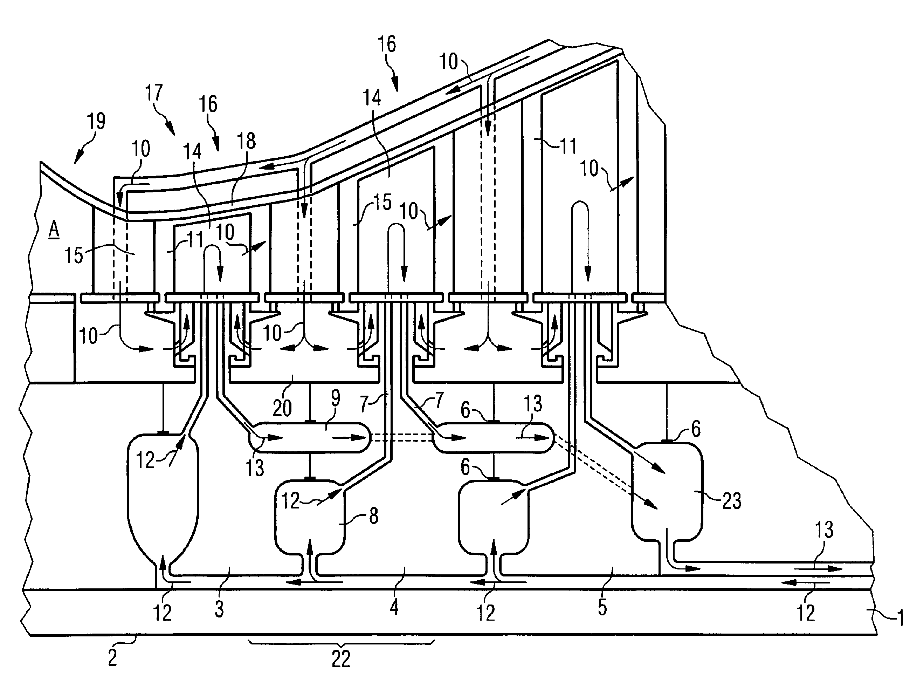

Anhand der Zeichnung wird die Erfindung beispielhaft näher erläutert. Es zeigt teilweise schematisch und nicht maßstäblich die einzige Zeichnungsfigur eine Gasturbine mit einer Turbinenwelle

Die einzige Zeichnungsfigur zeigt einen Schnitt durch eine Gasturbine 17 entlang der Drehachse 2 der Turbinenwelle 1. An der Turbinenwelle 1 nebeneinander angeordnet befinden sich die Scheiben 3, 4 und 5. Jeweils an diesen Scheiben 3, 4 und 5 befestigt sind in Laufschaufelringen 16 gruppierte Laufschaufeln 14 der ersten, zweiten und dritten Turbinenstufe. Jede Turbinenstufe wird gebildet durch eine am Stator 18 angebrachten Leitschaufelring in Verbindung mit einem, in Strömungsrichtung des Arbeitsmediums A gesehenen dieser nachgeschalteten Laufschaufelring 16. Auch die Leitschaufeln 15 werden über eine externe, nicht gezeigte Versorgung mit Frischluft versorgt, was durch die Strömungspfeile 10 dargestellt wird.

Die teilweise dargestellte Brennkammer 19 der Gasturbine 17 mündet in den Strömungskanal 11 des Arbeitsmediums A. Während des Betriebes der Gasturbine 17 strömt das Arbeitmedium A, von der Brennkammer 19 kommend, durch den Strömungskanal 11. Dabei strömt es vorbei an Leitschaufeln 15 und wirkt arbeitsleistend auf die Laufschaufeln 14.

Die an der Turbinenwelle 1 angeordneten benachbarten Scheiben 3, 4 und 5 schließen zwischen sich Hohlräume 8, 9, 20 ein, die die Turbinenwelle ringförmig umgreifen. Der innere Hohlraum 8 liegt gegenüber dem mittleren Hohlraum 9 radial innen. In Radialrichtung nach außen umgreift der äußere Hohlraum 20 den mittleren Hohlraum 9. Der innere Hohlraum 8 ist gegenüber dem mittleren Hohlraum 9 mittels einer fliehkraftbasierten Dichtung 6 abgedichtet, der ebenfalls über eine fliehkraftbasierte Dichtung gegenüber dem Hohlraum 20 abgedichtet ist. Nicht dargestellt ist, dass die aus einem Dichtdraht bestehende fliehkraftbasierte Dichtung, an beiden benachbarten Scheiben in einer Fase angelegt ist, um diesen sicher zu positionieren. Der innere Hohlraum 8 weist eine Bohrung oder einen Durchlass 7 auf, über den der Hohlraum 8 mit dem Versorgungsanschluss des integrierten Kühlmittelkanals der Laufschaufel 14 kommuniziert. Der innere Hohlraum 8 dient somit zur Kühlmittelversorgung der Laufschaufeln 14. Ebenso weist der Hohlraum 9 eine Bohrung 7 auf, die mit den Entsorgungsanschluss des integrierten Kühlmittelkanals der Laufschaufel 14 zur Kühlmittelentsorgung kommuniziert.

Der Kühlmittelfluss wird anhand der zweiten Turbinenstufe 22 erklärt. Frischdampf fließt, dargestellt durch die Strömungspfeile 12 des Frischdampfes, von einer Kühlmittelquelle axial entlang der Turbinenwelle 1 bis zum inneren Hohlraum 8, der zwischen den Scheiben 3 und 4 gebildet wird. Der Frischdampf wird durch die radial verlaufende Bohrung 7, welche durch die Scheibe 4 verlauft, zu einem Versorgungsanschluss einer Laufschaufel 14 der zweiten Turbinenstufe 22 geführt. In der Laufschaufel 14 wirkt sich der Frischdampf kühlend aus und verlässt diese über den Entsorgungsanschluss. Die am Entsorgungsanschluss angeordnete weitere radiale Bohrung 7 führt den Brauchdampf, dargestellt durch die Strömungspfeile 13, zu dem mittleren Hohlraum 9, der von den Scheiben 4 und 5 eingeschlossen wird. Von dort aus gelangt der Brauchdampf durch einen axialen Kanal zu einem weiteren Hohlraum 23, von wo aus er abtransportiert wird.

Von einer nicht dargestellten Frischluftquelle wird Frischluft 10 durch die Leitschaufeln 15 hindurch zu einem Hohlraum 20 geführt, der radial weiter außen als der Hohlraum 9 angeordnet ist. Von diesem Hohlraum 20 aus wird die Frischluft den Laufschaufeln 14 zugeführt. Die an der Hinterkante der Laufschaufeln 14 ausgeblasene Frischluft vermischt sich sodann mit dem Arbeitsmedium A der Gasturbine 17.

Durch die erfinderische Anordnung, koaxiale, radial beabstandete Hohlräume 8, 9, 20 zwischen den Scheiben 3, 4 und 5 auszubilden, und diese durch fliehkraftbasierte Dichtungen 6 einfach und zuverlässig abzudichten, ist eine gewinnbringende Anordnung erzielt worden. In Verbindung mit dem Verfahren, die Hohlräume 8, 9, und 20 mit Kühlmittel in unterschiedlicher Qualität und mit unterschiedlichen Drücken zu beaufschlagen, wobei diese Drücke von innen nach außen betrachtet abnehmen, wird eine deutliche Verbesserung gegenüber dem Stand der Technik erreicht.

### Bezugszeichenliste

- 1: Rotorwelle
- 2: Drehachse des Rotors
- 3: Scheibe
- 4: Scheibe
- 5: Scheibe
- 6: fliehkraftbasierte Dichtung
- 7: Bohrung / Durchlass
- 8: Innerer Hohlraum
- 9: Mittlere Hohlraum
- 10: Strömungspfeil für Frischluft
- 11: Strömungskanal
- 12: Strömungspfeil für Frischdampf
- 13: Strömungspfeil für Brauchdampf
- 14: Laufschaufel
- 15: Leitschaufel
- 16: Laufschaufelring
- 17: Gasturbine
- 18: Stator
- 19: Brennkammer
- 20: Äußerer Hohlraum
- 22: Zweite Turbinenstufe
- 23: Weiterer Hohlraum
- A: Arbeitsmedium

## Patentansprüche

1. Gasturbine mit einer Turbinenwelle (1), die eine Anzahl von nebeneinander angeordneter Scheiben (3, 4, 5) aufweist, an denen jeweils eine Anzahl von Laufschaufeln (14) sternförmig befestigbar sind, wobei diese mit zumindest einem Kühlmittel (10, 12, 13), welches durch Kühlmittelkanäle innerhalb der Laufschaufeln (14) strömt, kühlbar sind
wobei zwischen zwei unmittelbar benachbarten Scheiben (3, 4, 5) in Radialrichtung mehrere Hohlräume (8, 9, 20) eingeschlossen sind, die jeweils die Turbinenwelle (1) in Umfangsrichtung umgreifen und in denen Kühlmittel (10, 12, 13) in unterschiedlichen Drücken vorherrschen, wobei das oder die Kühlmittel (10, 12, 13) in die Hohlräume (8, 9, 20) jeweils ein und ausströmbar ist,
**dadurch gekennzeichnet,**
**dass** die radial benachbarten Hohlräume (8, 9, 20) mittels einer fliehkraftbasierten Dichtung (6), die an beiden benachbarten Scheiben (3, 4, 5) in einer Fase anliegt, gegeneinander abgedichtet sind.

2. Gasturbine nach Anspruch 1,
**dadurch gekennzeichnet,**
**dass** die integrierten Kühlmittelkanäle einer jeden auf ein und derselben Scheibe (3, 4, 5), angeordneten Laufschaufel (14), mit ein und demselben Hohlraum (8, 9, 20), der mit einer benachbarten Scheibe (3, 4, 5), eingeschlossen wird, über eine radiale Bohrung oder Durchlass (7) kommuniziert,

3. Gasturbine nach einem der Ansprüche 1 oder 2,
**dadurch gekennzeichnet,**
**dass** mindestens einer der Hohlräume (8, 9, 20) mit einer Kühlmittelversorgung oder Kühlmittelentsorgung kommuniziert.

4. Verfahren zum Kühlen einer Laufschaufel (14) in einer Gasturbine nach Anspruch 1,
wobei die in deren Turbinenwelle (1) strömenden Kühlmittel (10, 12, 13) unterschiedliche Drücke aufweisen und der Druck desjenigen Kühlmittels (12, 13), welches durch einen Hohlraum (8, 9) strömt, größer ist als der Druck desjenigen Kühlmittels (13, 10), welches durch den radial nächstäußeren Hohlraum (9, 20) strömt,
**dadurch gekennzeichnet,**
**dass** im radial innersten Hohlraum (8) als Kühlmittel Frischdampf (12), im radial nächstäußeren Hohlraum (9) als Kühlmittel Brauchdampf (13) und im radial nächstäußeren Hohlraum (20) als Kühlmittel Frischluft (10) strömt.

## Claims

1. Gas turbine with a turbine shaft (1) which has a number of discs (3, 4, 5) which are arranged next to one another and to which a number of moving blades (14) can be fastened in each case in a star-shaped manner, these being capable of being cooled by means of at least one coolant (10, 12, 13) which flows through coolant ducts within the moving blades (14), there being enclosed in the radial direction between two directly adjacent discs (3, 4, 5) a plurality of cavities (8, 9, 20) which in each case surround the turbine shaft (1) in a circumferential direction and in which coolant (10, 12, 13) prevail at different pressures, the coolant or coolants (10, 12, 13) being capable in each case of flowing into and out of the cavities (8, 9, 20), **characterized in that** the radially adjacent cavities (8, 9, 20) are sealed off with respect to one another by means of a seal (6) which is based on centrifugal force and which bears against the two adjacent discs (3, 4, 5) in a chamfer.

2. Gas turbine according to Claim 1, **characterized in that** the integrated coolant ducts of each moving blade (14) arranged on one and the same disc (3, 4, 5) communicate via a radial bore or passage (7) with one and the same cavity (8, 9, 20) which is enclosed by means of an adjacent disc (3, 4, 5).

3. Gas turbine according to either one of Claims 1 and 2,
**characterized in that** at least one of the cavities (8, 9, 20) communicates with a coolant supply or coolant disposal.

4. Method for cooling a moving blade (14) in a gas turbine according to Claim 1, the coolants (10, 12, 13) which flow in this turbine shaft (1) having different pressures, and the pressure of that coolant (12, 13) which flows through one cavity (8, 9) being higher than the pressure of that coolant (13, 10) which flows through the radially next outer cavity (9, 20), **characterized in that** fresh steam (12) flows as coolant in the radially innermost cavity (8), service steam (13) flows as coolant in the radially next outer cavity (9) and fresh air (10) flows as coolant in the radially next outer cavity (20).

## Revendications

1. Turbine à gaz ayant un arbre ( 1 ) de turbine qui a un certain nombre de disques( 3,4,5 ) qui sont disposés les uns à côté des autres et auxquels peuvent être fixées en forme d'étoile respectivement un certain nombre d'aubes ( 14 ) mobiles, celles-ci pouvant être refroidies par au moins un fluide ( 10,12,13 ) de refroidissement qui passe dans des canaux pour du fluide de refroidissement au sein des aubes ( 14 ) mobiles,
dans lequel entre deux disques ( 3,4,5 ) immédiatement voisins sont incorporées dans la direction radiale plusieurs cavités ( 8,9,20 ) qui entourent respectivement l'arbre ( 10 ) de la turbine dans la direction périphérique et dans lesquelles règnent des fluides ( 10,12,13 ) de refroidissement en des pressions différentes, le ou les fluides ( 10,12,13 ) de refroidissement pouvant entrer dans les cavités ( 8,9,20 ) et respectivement en sortir,
**caractérisée**
**en ce que** les cavités ( 8,9,20 ) voisines radialement sont rendues étanches les unes par rapport aux autres au moyen d'une étanchéité ( 6 ) reposant sur la force centrifuge et s'appliquant suivant un biseau aux deux disques ( 3,4,5 ) voisins.

2. Turbine à gaz suivant la revendication 1,
**caractérisée**
**en ce que** les canaux intégrés pour du fluide de refroidissement de chaque aube ( 14 ) mobile disposés sur un seul et même disque ( 3,4,5 ) communiquent par un trou ou un passage ( 7 ) radial avec une seule et même cavité ( 8,9,20 ) qui est incluse dans un disque ( 3,4,5 ) voisin.

3. Turbine à gaz suivant l'une des revendications 1 ou 2,
**caractérisée**
**en ce qu'**au moins l'une des cavités ( 8,9,20 ) communique avec une alimentation en du fluide de refroidissement ou avec une évacuation de fluide de refroidissement.

4. Procédé de refroidissement d'une aube ( 14 ) mobile d'une turbine à gaz suivant la revendication 1,
dans lequel le fluide ( 10,12,13 ) de refroidissement passant dans son arbre ( 1 ) de turbine à des pressions différentes et la pression du fluide ( 12,13 ) de refroidissement qui passe dans une cavité ( 8,9 ) est plus grande que la pression du fluide ( 13,10 ) de refroidissement qui passe dans la cavité ( 9,1 ) suivante extérieurement dans la direction radiale,
**caractérisé**
**en ce que** de la vapeur ( 12 ) fraîche passe comme fluide de refroidissement dans la cavité ( 8 ) la plus à l'intérieur radialement, de la vapeur ( 13 ) usagée comme fluide de refroidissement dans la cavité ( 9 ) suivante extérieurement dans la direction radiale et de l'air ( 10 ) frais comme fluide de refroidissement dans la cavité ( 20 ) suivante extérieurement dans la direction radiale.
